# EUROPEAN PATENT SPECIFICATION

(11) **EP 1 941 249 B1**
(45) Date of publication and mention of the grant of the patent: **02.12.2015**
(21) Application number: 06762382.7
(22) Date of filing: 04.07.2006
(51) Int. Cl.: G01G 15/00, B65B 1/46

(54) **APPARATUS AND CORRESPONDING METHOD FOR WEIGHING CONTAINERS**
VORRICHTUNG UND ENTSPRECHENDES VERFAHREN ZUM WÄGEN VON BEHÄLTERN
APPAREIL ET PROCÉDÉ CORRESPONDANT PERMETTANT DE PESER DES RÉCIPIENTS

(30) Priority: 05.07.2005 IT BO20050453
(43) Date of publication of application: 09.07.2008
(73) Proprietor: I.M.A. Industria Macchine Automatiche S.p.A., 40064 Ozzano dell'Emilia (BO) (IT)
(72) Inventor: TREBBI, Claudio, I-40059 Medicina (IT); GABUSI, Gabriele, I-40055 Castenaso (IT); BECHINI, Claudio, I-53100 Siena (IT)
(74) Representative: Crugnola, Pietro
(86) International application number: PCT/EP2006/006490
(87) International publication number: WO 2007/003407

(56) References cited:
- EP-A- 0 501 208
- EP-A- 1 582 193
- US-A- 5 092 414
- US-A- 5 515 740

## Description

The present invention relates to an apparatus and to a method for weighing containers, in particular for weighing containers intended for being filled with pharmaceutical or cosmetic by a dosing unit in an automatic filling machine.

The use in filling or dosing machines suitable for dosing liquid or powder products into containers such as bottles, ampoules, vials or the like, of weighing apparatuses that are able to measure the weight of the product dispensed inside said containers is known.

Weight measuring is necessary both for rejecting from production containers that are non-conforming because they contain a quantity of product outside the permitted dosing tolerance range and for correcting any excesses or shortfalls in the dosing of the product, for example by acting on the filling unit through a feedback.

Especially in the pharmaceutical field, it is very important to check that the volume or weight of the product introduced into the containers is exactly as requested, with very narrow tolerance ranges.

In general, typically in a filling machine, two weighing stations are provided, the two weighing stations being provided with respective weight measuring apparatuses

A first apparatus, positioned at a first weighing station located upstream of the dosing unit or station, measures the weight of the empty containers, whereas a second apparatus, positioned at a second weighing station located downstream of the dosing station, measures the gross weight of the filled containers.

The difference of the two measured weights enables the net weight of the dosed product, namely the volume thereof, to be determined.

In order to perform weighing of a container, the latter generally has to be transferred from the conveying line or from conveying means of the filling machine to the weighing apparatus, deposited on a suitable supporting plane or measuring plane of a load cell or balance for a time interval necessary for weighing.

At the end of measuring, the container in question can be rejected because it is non conforming or be reinserted into the conveying line.

weighing apparatuses exist in which the supporting plane of the balance is coplanar with the sliding or supporting plane of the containers in the conveying means.

In these filling machines, which generally have continuous advancing motion, the containers are weighed as the latter slide forward on then supporting plane of the balances, moved by suitable driving means, for example carousels or belts provided with housings.

Such apparatuses enable a total weight measurement to be performed, i.e. they enable all the filled containers to be weighed.

A drawback of such apparatuses consists in the fact that they do not enable containers of reduced weight to be weighed with adequate precision, topically containers of pharmaceutical products with low dosage.

For such applications it is in fact necessary to use suitable balances, for example of the load cell type, that is able to measure very small weights with high values of accuracy and precision.

These balances are extremely sensitive to mechanical vibrations and to electrostatic charges that the conveying means and the corresponding containers thereupon can generate.

It has been ascertained that the load cells, that are suitably insulated from vibrations and from electrostatic charges, preferably have to be positioned at a suitable distance from the conveying lines of the machine to prevent disturbances or alterations to the measurements.

In addition to that, for correct measuring it is necessary for a preset minimum time interval to elapse between the depositing of the container on the supporting plane and measuring of the weight.

This time interval is necessary for enabling the vibrations to be dampened that are generated by resting the container on such supporting plane.

This functional requirement is thus incompatible with weighing apparatus with continuous advancing motion as those disclosed above.

In some filling machines provided with intermittent indexed advancing motion weighing apparatuses are installed comprising one or more balances that are suitably insulated and spaced from the conveying line of the containers.

Suitable transferring means, for example articulated arms or mechanisms of different type, removes one or more containers from the conveying line of the machine and deposits them on the load cells.

After weighing, the transferring means returns the containers to the conveyor, in the same removing position.

Removing, weighing and reinserting operations of the container can occur during one of the pause steps of the intermittent motion of the machine.

In this way it is possible to weigh all the containers that are on the conveying line with the drawback of having a low production speed that is sometimes incompatible with industrial needs.

These weighing apparatuses are thus generally used to perform a weigh measurement of statistical or partial type, that enables only some of the containers on the conveying line, which are removed at random, to be weighed accurately and precisely.

In this case, the pause step in the intermittent indexed motion of the filling machine enables the containers to be removed and inserted into the conveyor.

The containers, once they are weighed, are returned on the conveyor and inserted in corresponding empty recesses or housings of the conveyor, the recesses being created by suitably interrupting the supply of the containers upstream of the weight measuring apparatus.

In this way on the conveyor there is created between the two weighing stations, one or more gaps in the row of containers, in other words one or more empty recesses in the conveying line.

A drawback of such known weighing apparatuses is that they are not suitable for being used on filling machines in which product dosing cannot be prohibited in the event of lack of container, as occurs, for example, in some powder products dosing machines.

EP 0501208 A1 discloses a weighing apparatus for checking aerosol cans comprising a rotating rod a first and second rotating guide members and a rotating carrier. A work conveyed on a line conveyor is guided by plates towards the rotating rod where the work is engaged by the spiral groove and conveyed to the first rotating guide member provided with notched portions for engaging the works. Works loaded by the notched portions are received by the notched portions clamping arms of the rotating carrier and one by one conveyed to a convey portion of a weighing conveyor. The weighing apparatus transfers all the works conveyed by the line conveyor to the weighing conveyor, where the works are weighed while travelling from one end to the other end of the weighing conveyor.

US 5515740 discloses a machine for dosing a pharmaceutical product into capsules provided with a testing apparatus including a first and a second weighing unit to weigh, respectively, a capsule before and after the dosing unit, the testing step being performed on a sample of the capsules conveyed by a feeder unit including a rotating drum. The drum is provided along its entire lateral surface with cylindrical cavities spaced with a constant pitch, each cavity receiving a capsule and retaining it by suction. A first transfer device conveys the capsules from the drum to a measurement station at which the capsules are weighed by a weighing balance. The first transfer device comprises a pick-off rotating member which takes the capsules from the drum and feed a first conveyor member which transfer the capsules to the measurement station along a rectilinear path. A second transfer device conveys the capsules from the measurement station back to the drum. The second transfer device includes a second conveyor member that removes the capsules from the measurement station along a rectilinear path and an introduction member that, rotating, removes and conveys the capsules from the second conveyor member to the drum.

US 5092414 discloses a straight line fill-to-weight machine having a multiple stationary weighing and filling platforms serviced by parallel straight line infeed and discharge conveyors which convey container or material. Grippers transfer the containers to be weighed transversely to stationary weighing and filling platform and similar grippers transfer the containers from the platform to a parallel discharge conveyor.

EP 1582193 A1 discloses a machine for metering a product into capsules conveyed by wheels and comprises an empty-capsule weighing station having a fast-response scale, a first pickup arm for removing a capsule from an empty-capsule conveying wheel and feeding and reclaiming it to and from the fast-response scale, and a second release arm for removing a capsule from the pickup arm and realising it to the conveying wheel.

An object of the present invention is thus to improve known apparatuses and methods for weighing containers in an automatic dosing machine, particularly for pharmaceutical and cosmetic use.

Another object is to provide an apparatus and method that enables to measure the weight of containers accurately and precisely and which enables high speed operation both with continuous motion and with intermittent indexed motion.

A further object is to provide an apparatus and method that enables both of weight measurement of the total type to be performed, i.e. the measurement of the weigh of all the containers moved by the conveying means, and weight measurement of the statistical type, i.e. the measurement of the weigh of some of the conveyed containers.

Another object is to provide an apparatus and a method that enables there to be no empty housing or recesses downstream of the apparatus, i.e. missing containers.

In a first aspect of the invention an apparatus is provided for weighing containers according to claim 1.

Owing to this aspect of the invention, an apparatus is made available for weighing containers that enables the weight of containers to be measured in a precise and accurate manner, enabling operation at high speed both with continuous motion and with intermittent indexed motion.

The transferring means in fact enables, owing to the particular configuration and arrangement thereof, the removal of the containers from the conveying means both during a pause step, in the case of intermittent indexed motion of the latter, and during movement, if the transferring means moves with continuous motion.

In a second aspect of the invention a method is provided for weighing containers according to claim 12.

Owing to this aspect of the present invention, a method is provided for weighing containers that enables both a weight measurement of total type to be performed, i.e. the measurement of the weigh of all the containers moved by the conveying means, and a statistical weight measurement, i.e. the measurement of the weigh of some of the conveyed containers.

The invention can be better understood and implemented with reference to the enclosed drawings, that show an exemplifying and non limitative embodiment thereof, in which:
Figure 1 is a schematic plan view of the weighing containers apparatus, that is the object of the invention, associated with containers conveying means in a weighing position of the containers;
Figures 2 to 7 are schematic plan views on reduced scale of the apparatus in the Figure 1 in subsequent operating steps; Figure 8 is a schematic plan view of a version of the apparatus in Figure 1.

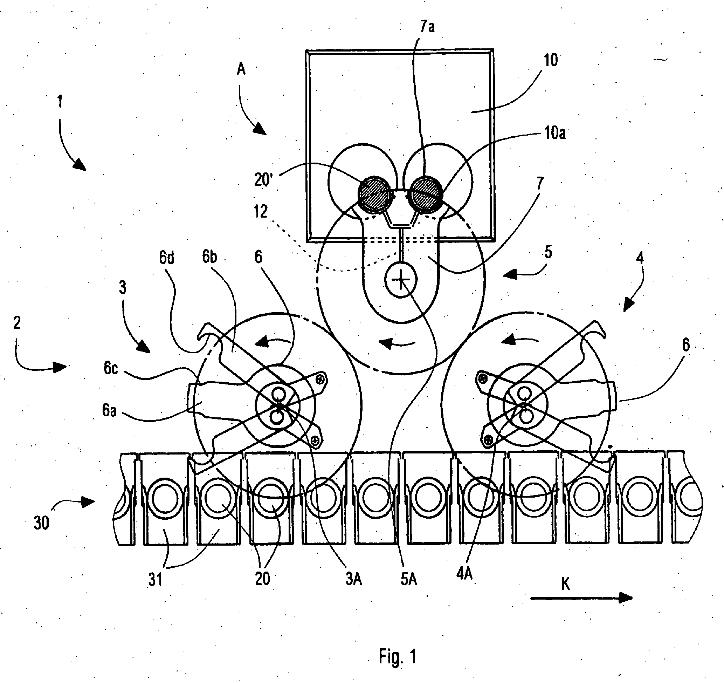

With reference to Figures 1 to 7, 1 generally indicates a weighing apparatus for weighing containers 20 moved in an advancing direction K by conveying means 30 that are part of an automatic dosing or filling machine that is of known type and is not shown.

The apparatus 1 comprises weighing means 10 and transferring means 2, which are able to transfer one or more containers 20 to be weighed, for example two as illustrated in Figure 1, from the conveying means 30 to the weighing means 10 and are able to transfer one or more containers 20' that have already been weighed from the weighing means 10 to the conveying means 30.

The transferring means 2 comprises first grasping means 3, second grasping means 4 and third grasping means 5, all rotating respectively around a first rotation axis 3A, a second rotation axis 4A and a third rotation axis 5A.

The rotation axes 3A, 4A, 5A, are parallel to one another and are substantially perpendicular to a movement or sliding plane of the containers 20.

The first grasping means 3 and the second grasping means 4 rotate in the same direction, which is opposite the direction of rotation of the third grasping means 5 and is concordant with the movement direction in the direction K of the conveying means 30.

The first grasping means 3 is suitable for removing two containers 20 to be weighed from the conveying means 30 and for transferring the two containers 20 to the third grasping means 5.

The latter transfers the containers 20 to the weighing means 10 for the subsequent weighing thereof.

At the end of weighing, the third grasping means 5 removes the weighed containers 20' from said weighing means 10 and gives the latter to the second grasping means 4.

The latter returns the weighed containers 20' on the conveying means 30.

The first grasping means 3 and the second grasping means 4 may comprise, for example as illustrated in Figures 1 to 7, respective gripper means 6 that is able to grasp the containers 20.

The gripper means 6, in the case of removing a pair of containers 20, 20', comprises a central fixed arm 6a and two external movable arms 6b, which are moved towards or away from said fixed arm 6a respectively to grasp or release the containers 20, 20'.

The free ends of the arms 6a, 6b have suitable shaped seats, respectively first seats 6c and second seats 6d, suitable for abutting on the external surface of the container 20, 20'.

The third grasping means 5 comprises first sucking supporting means 7 provided with one or more cavities 7a, for example two, intended for abutting on the external surface of the containers 20, 20'.

The cavities 7a have a shape that is substantially complementary to the external side surface of the containers 20, 20' and are connected to sucking means that is of known type and is not illustrated, for example vacuum pumps, through appropriate conduits 12 made in the first supporting means 7 in order to firmly hold each container abutting on the cavities 7a, thus creating a "suction cup" effect.

The sucking force exerted by the first sucking supporting means 7 must be such as to overcome the force of gravity and the centrifugal force that act on the containers 20, 20' during rotation of the second grasping means 4.

Alternatively, instead of the cavities 7a it is possible to provide suction cup means that is of known type and is not illustrated that is also connected to the sucking means and having shape and geometry correlated to the shape and dimension of the containers 20.

In a version of the apparatus 1 that is not illustrated, is provided that both the first grasping means 3 and the second grasping means 4 comprise first sucking supporting means 7.

In this case, the second grasping means 4 may include gripper means 6 as disclosed above.

Still according to what was illustrated in Figures 1 to 7, the weighing means 10 comprises one or more balances or load cells 10a of known type and generally used for weighing the containers during the filling process in automatic machines.

The weighing means 10 is suitably spaced from the conveying means 30 in order to eliminate or minimise interferences and disturbances during measuring of the weight.

In the embodiment illustrated in Figures 1 to 7, the conveying means 30 comprises a linear conveyor of known type, for example a closed-loop conveyor belt wound on at least two pulleys with a rotation axis substantially parallel to the movement or supporting plane of the containers.

The conveyor belt 30 has a plurality of housings 31, each of which is intended for receiving and containing, at least partially, a respective container 20.

In this way, the containers 20 in addition to being spaced apart from one another, are precisely positioned with respect to the conveyor belt 30.

The second grasping means 4 can directly support the containers 20 on the supporting planes of the balances 10a.

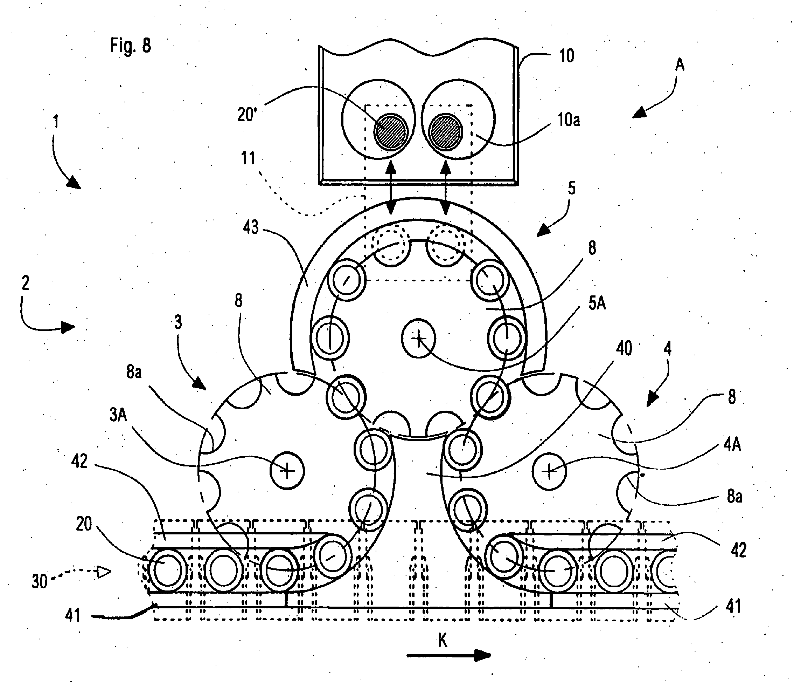

Alternatively, as illustrated in the version of the apparatus in Figure 8, positioning means 11 of known type can be provided, for example articulated arms, that is able to remove from the third grasping means 5 the containers 20 to be weighed and position the containers 20 on the corresponding load cells 10a.

With reference to Figures 1 to 7, operation of the apparatus 1 for weighing containers 20 provides, in pause or weighing position A (Figure 1), for the transferring means 2 to be stationary in the positions illustrated in the Figure 1 to enable the weighing means 10 to measure the weight of the two containers 20 positioned on the respective load cells 10a.

At the end of weight measuring, the third grasping means 5 removes the weighed containers 20' and is rotated for transferring such weighed containers 20' to the second grasping means 4.

Almost simultaneously, the first grasping means 3 and the second grasping means 4 are rotated in the same direction, which is opposite the direction of rotation of the third grasping means 5 and is concordant with the movement direction in the direction K of the conveying means 30.

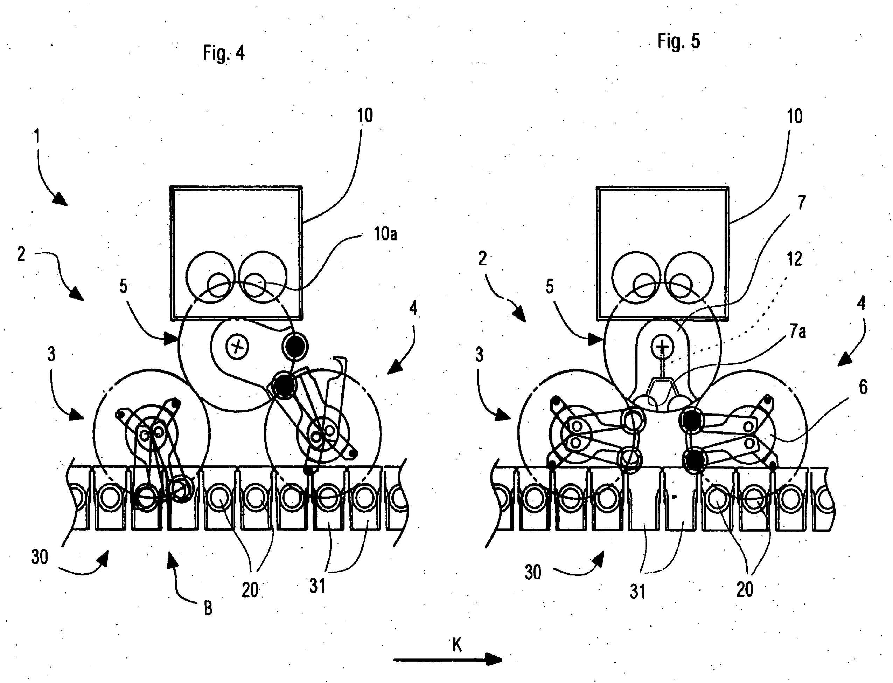

In the subsequent steps, illustrated in Figures 4 and 5, whilst the first grasping means 3 removes a pair of containers 20 to be weighed from the conveying means 30, in a removing position B, the second grasping means 4 receives the weighed containers 20' from the third grasping means 5.

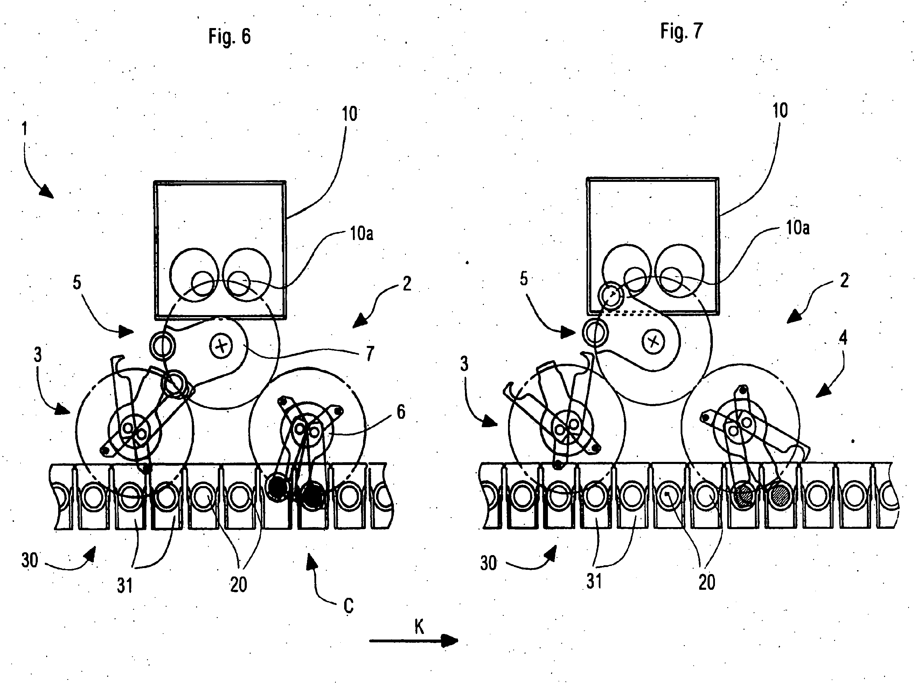

Subsequently, whilst the first grasping means 3 gives the containers 20 to be weighed to the third grasping means 5, the second grasping means 4, in an inserting position C (Figures 6 and 7), deposits the weighed containers 20' on the conveying means 30, in the same housings 31 left free by the two containers 20 to be weighed that have just been removed. In this way, no empty housing 31 is realized on the conveying means 30 during operation.

Rotation of the grasping means 3, 4, 5 stops in the pause or weighing position A of the subsequent two containers 20 to be weighed.

The motion of the grasping means 3, 4, 5 can be continuous or intermittent in an indexed manner, in function of the advancing motion of the conveying means 30, i.e. of the filling machine.

The advancing speed of the conveying means 30 and of the transferring means 2 are closely connected inasmuch as the time taken by the conveying means 30 to move from the removing position B to the inserting position C has to be such as to enable the transfer of the weighed containers 20' from the weighing means 10 to the aforementioned conveying means 30.

If motion is intermittent the time lapse necessary to measure the weight, in weighing position A of the apparatus 1, may coincide with a pause step of this intermittent motion.

The apparatus 1 in the embodiment in Figures 1-7 performs a statistical or partial weight measuring by means of which it is possible to weigh with extreme precision and accuracy only some of the containers in transit in the filling machine.

Figure 8 illustrates a version of the apparatus 1, in which the grasping means 3, 4, 5 comprises second supporting means 8 provided with a plurality of second cavities suitable for receiving respective containers 20.

Each supporting means 8 preferably consists of a circular disk, the so-called "star", having a thickness that is variable according to the dimensions of the container to be moved and is provided on the peripheral edge with the second cavities 8a that are angularly spaced apart from one another.' This supporting means or stars 8 are known components and are widely used to move containers in the filling machines.

In this case correct movement of the containers 20, 20' is assured by the use of guiding means 40, 41, 42, 43 that is suitably shaped for keeping the containers 20, 20' aligned one the conveying means 30 before and after weighing and abutting on the cavities 8a of the second supporting means 8.

The version of the apparatus 1 disclosed above enables a total weight measurement to be performed, i.e. to weigh all the containers 20 that are moved by the conveying means 30.

In this case, the advancing motion of the latter and of the transferring means 2 is only of intermittent indexed type, the motion pause steps being necessary for transferring and measuring the weight of the containers 20 to be weighed.

It is important to stress that the grasping means 3, 4, 5 of the transferring means 2 of the apparatus 2 performs only rotary motions.

The rotary motions are, as is known to those skilled in the art, particularly indicated and suitable for mechanisms and devices intended for handling and packaging pharmaceutical products in a controlled atmosphere, typically in an aseptic or sterile environment.

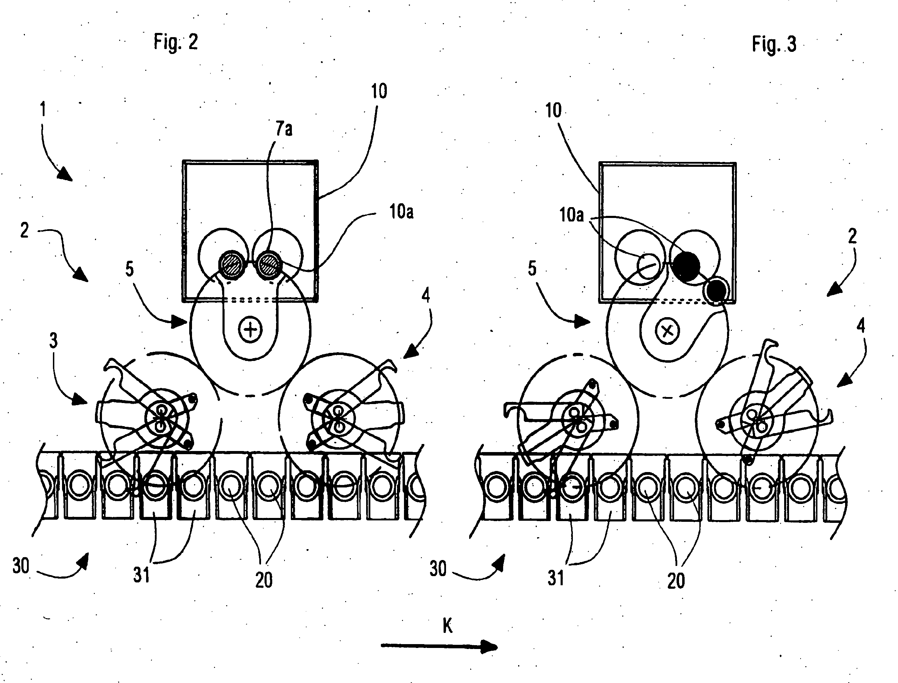

With reference to Figures 2 to 7, the method for weighing containers 20, moved by conveying means 30 through weighing means 10, comprises removing a container 20 to be weighed from the conveying means 30 and transferring said container 20 to be weighed to weighing means 10; removing a weighed container 20' from said weighing means 10 and transferring said weighed container 20' to the conveying means 30; and weighing the container 20 to be weighed.

In particular, removing and transferring the container 20 to be weighed is substantially simultaneous with removing and transferring the weighed container 20'.

Furthermore, removing the container 20 to be weighed from a respective housing 31 of the conveying means 30 and transferring the weighed container 20' to the conveying means 30 is provided, inserting the weighed container 20' into such empty housing 31 previously occupied by the container to be weighed 20 that has just been removed.

Removal and transferring the containers 20, 20' can be achieved with continuous motion or with intermittent indexed motion.

After transferring of the container 20 to be weighed to the weighing means 10 removing and transferring are stopped for a pause time that is necessary for weighing said container 20.

In the case of removing and transferring with intermittent indexed motion, said pause time may almost coincide with a pause step of said intermittent motion.

With reference to Figure 8, the method provides for alternatively removing individually and in succession each container 20 to be weighed from said conveying means 30 to perform a total type weight measurement.

In this case, removing and transferring the containers 20, 20' are achieved with intermittent indexed motion, so that weighing is achieved in a pause step of the intermittent indexed motion.

The invention that is thus conceived can be the object of numerous changes and variations that all fall within the limits of the inventive concept as claimed.

## Claims

1. Apparatus (1) for weighing containers (20) moved by conveying means (30), said conveying means comprising a linear conveyor (30) having a plurality of housings (31), each housing (31) being intended for receiving and containing, at least partially, a respective container (20) so that the containers are spaced apart from one another and precisely positioned with respect to said linear conveyor (30), said apparatus (1) further comprising weighing means (10) and transferring means (2) suitable for transferring at least a container (20) to be weighed from said conveying means (30) to said weighing means (10) and for transferring at least a weighed container (20') from said weighing means (10) to said conveying means (30), wherein said transferring means (2) comprises first grasping means (3) suitable for removing said at least a container (20) to be weighed from a respective housing (31) of said linear conveyor (30); second grasping means (4) suitable for transferring said at least a weighed container (20') to said linear conveyor (30) by inserting said at least a weighed container (20') into an empty housing (31) previously occupied by a container to be weighed (20), and third grasping means (5) suitable for receiving said at least a container to be weighed (20) from said first grasping means (3) and transferring said at least a container to be weighed (20) to said weighing means (10), and suitable for removing said at least a weighed container (20') from said weighing means (10) after weighing and for giving said at least a weighed container (20') to the second grasping means (4), said first grasping means (3), said second grasping means (4) and said third grasping means (5) being conveying means rotating respectively around a first rotation axis (3A), a second rotation axis (4A) and a third rotation axis (5A), said rotation axes (3A, 4A, 5A) being substantially parallel to one another and perpendicular to a movement plane of said containers (20), said apparatus (1) being so configured as to weigh said container in a pause time of said first, second and third grasping means (3, 4, 5).

2. Apparatus according to claim 1, wherein the grasping means (3, 4, 5) comprises gripper means (6) suitable for grasping respective containers (20, 20').

3. Apparatus according to claim 1 or 2, wherein said grasping means (3, 4, 5) comprises first sucking supporting means (7) suitable for supporting and holding respective said containers (20, 20').

4. Apparatus according to claim 3, wherein each first sucking supporting means (7) comprises at least a first cavity (7a) that is suitable for receiving a respective container (20) and is connected to sucking means.

5. Apparatus according to claim 3, wherein said grasping means (3, 4, 5) comprises second supporting means (8) provided with a plurality of second cavities (8a) suitable for receiving respective containers (20).

6. Apparatus according to claim 5, wherein said second cavities (8a) of each second supporting means (8) are angularly spaced.

7. Apparatus according to claim 5, comprising guiding means (40, 41, 42, 43) suitable for keeping the containers (20, 20') at least abutting on the respective second cavities (8a) of said second supporting means (8).

8. Apparatus according to claims 4 or 5, wherein said cavities (7a, 8a) have a shape that is substantially complementary to an external side surface of said containers (20).

9. Apparatus according to any one of claims 1 to 8, wherein said weighing means (10) comprises at least a balance (10a).

10. Apparatus according to claim 9, wherein said weighing means (10) comprises positioning means (11) suitable for transferring a container (20, 20') from the transferring means (2) to the corresponding balance (10a) and vice versa.

11. Apparatus according to any one of claims 1 to 10, wherein said transferring means (2) is driven with indexed intermittent motion or with continuous motion.

12. Method for weighing containers (20) moved by a linear conveyor (30) through weighing means (10), the linear conveyor (30) having a plurality of housings (31), each housing (31) being intended for receiving and containing, at least partially, a respective container (20) so that the containers are spaced apart from one another and precisely positioned with respect to said linear conveyor (30), comprising removing at least a container (20) to be weighed from said linear conveyor (30) by means of first grasping means (3), transferring said container (20) to be weighed to said weighing means (10) and removing at least a weighed container (20') from said weighing means (10) by means of third grasping means (5), and transferring said weighed container (20') to said linear conveyor (30) by means of second grasping means (4); and weighing said container (20) to be weighed, wherein said removing and said transferring occur with rotary motion, said removing at least a container to be weighed (20) comprising removing the latter from a respective housing (31) of said linear conveyor (30) and said transferring said weighed container (20') comprising inserting said weighed container (20') into an empty housing (31) previously occupied by a container to be weighed (20), after said transferring said container (20) to be weighed on said weighing means (10) said removing and transferring being interrupted for a pause time of said first, second and third grasping means necessary for weighing said container (20).

13. Method according to claim 12, wherein said removing and transferring at least a container to be weighed (20) and said removing and transferring at least a weighed container (20') are achieved substantially at the same time.

14. Method according to claim 12 or 13, wherein said removing and transferring said container (20, 20') are achieved with continuous motion.

15. Method according to claim 12 or 13, wherein said removing and transferring said container (20, 20') are achieved with intermittent indexed motion.

16. Method according to claim 15, wherein said pause time substantially corresponds to a pause step of said intermittent indexed motion.

17. Method according to any one of claims 12 to 16, wherein said removing at least a containers- to be weighed (20) from said conveying means (30) comprises removing individually and in succession each container (20) from said conveying means (30).

## Patentansprüche

1. Apparatur (1) zum Wiegen von Behältern (20), die durch Fördermittel (30) bewegt werden, wobei die Fördermittel einen Linearförderer (30) aufweisen, der eine Vielzahl von Gehäusen (31) aufweist, wobei jedes Gehäuse (31) dazu vorgesehen ist, um zumindest teilweise einen entsprechenden Behälter (20) aufzunehmen und zu fassen, so dass die Behälter räumlich getrennt voneinander und präzise in Bezug auf den Linearförderer (30) positioniert werden, wobei die Apparatur (1) ferner Wiegemittel (10) und Übertragungsmittel (2) aufweist, die geeignet sind, um zumindest einen zu wiegenden Behälter (20) von den Fördermitteln (30) zu den Wiegemitteln (10) zu übertragen, und um zumindest einen gewogenen Behälter (20') von den Wiegemitteln (10) zu den Fördermitteln (30) zu übertragen, wobei die Übertragungsmittel (2) Folgendes aufweisen, nämlich erste Greifmittel (3), die geeignet sind, um den zumindest einen zu wiegenden Behälter (20) von einem jeweiligen Gehäuse (31) des Linearförderers (30) zu entfernen; zweite Greifmittel (4), die geeignet sind, um den zumindest einen gewogenen Behälter (20') zu dem Linearförderer (30) zu übertragen, indem der zumindest eine gewogene Behälter (20') in ein leeres Gehäuse (31) eingesetzt wird, das zuvor von einem zu wiegenden Behälter (20) besetzt war, und dritte Greifmittel (5), die geeignet sind, um den zumindest einen zu wiegenden Behälter (20) von den ersten Greifmitteln (3) aufzunehmen und den zumindest einen zu wiegenden Behälter (20) zu den Wiegemitteln (10) zu übertragen, und geeignet sind, um den zumindest einen gewogenen Behälter (20') von den Wiegemitteln (10) nach dem Wiegen zu entfernen, und um den zumindest einen gewogenen Behälter (20') zu den zweiten Greifmitteln (4) zu reichen, wobei die ersten Greifmittel (3), die zweiten Greifmittel (4) und die dritten Greifmittel (5) Fördermittel sind, die jeweils um eine erste Rotationsachse (3A), eine zweite Rotationsachse (4A) und eine dritte Rotationsachse (5A) rotieren, wobei die Rotationsachsen (3A, 4A, 5A) im Wesentlichen parallel zueinander und rechtwinklig zu einer Bewegungsebene des Behälters (20) sind, wobei die Apparatur (1) derart konfiguriert ist, um den Behälter in einer Pausenzeit der ersten, zweiten und dritten Greifmittel (3, 4, 5) zu wiegen.

2. Apparatur gemäß Anspruch 1, wobei die Greifmittel (3, 4, 5) Greifermittel (6) aufweisen, die geeignet sind, um entsprechende Behälter (20, 20') zu greifen.

3. Apparatur gemäß Anspruch 1 oder 2, wobei die Greifmittel (3, 4, 5) erste Saugtragmittel (7) aufweisen, die geeignet sind, um die jeweiligen Behälter (20, 20') zu tragen und zu halten.

4. Apparatur gemäß Anspruch 3, wobei jedes erste Saugtragmittel (7) zumindest eine erste Kavität (7a) aufweist, die geeignet ist, um einen jeweiligen Behälter (20) aufzunehmen und mit Saugmitteln verbunden ist.

5. Apparatur gemäß Anspruch 3, wobei die Greifmittel (3, 4, 5) zweite Tragmittel (8) aufweisen, die mit einer Vielzahl von zweiten Kavitäten (8a) versehen sind, die geeignet sind, um jeweilige Behälter (20) aufzunehmen.

6. Apparatur gemäß Anspruch 5, wobei die zweiten Kavitäten (8a) eines jeden zweiten Tragmittels (8) winklig beabstandet sind.

7. Apparatur gemäß Anspruch 5, die Führungsmittel (40, 41, 42, 43) aufweist, die geeignet sind, um die Behälter (20, 20') zumindest angrenzend an die jeweiligen zweiten Kavitäten (8a) der zweiten Tragmittel (8) zu halten.

8. Apparatur gemäß der Ansprüche 4 oder 5, wobei die Kavitäten (7a, 8a) eine Form aufweisen, die im Wesentlichen komplementär zu einer äußeren Seitenfläche der Behälter (20) ist.

9. Apparatur gemäß einem der Ansprüche 1 bis 8, wobei die Wiegemittel (10) zumindest eine Waage (10a) aufweisen.

10. Apparatur gemäß Anspruch 9, wobei die Wiegemittel (10) Positionierungsmittel (11) aufweisen, die geeignet sind, um einen Behälter (20, 20') von den Übertragungsmitteln (2) zu der jeweiligen Waage (10a) und umgekehrt zu übertragen.

11. Apparatur gemäß einem der Ansprüche 1 bis 10, wobei die Übertragungsmittel (2) mit einer indexierten getakteten Bewegung oder mit einer kontinuierlichen Bewegung angetrieben sind.

12. Verfahren zum Wiegen von Behältern (20), die durch einen Linearförderer (30) durch Wiegemittel (10) bewegt werden, wobei der Linearförderer (30) eine Vielzahl von Gehäusen (31) aufweist, wobei jedes Gehäuse (31) dazu vorgesehen ist, um zumindest teilweise einen jeweiligen Behälter (20) aufzunehmen und zu fassen, so dass die Behältern räumlich getrennt voneinander und präzise in Bezug auf den Linearförderer (30) positioniert sind, wobei das Verfahren das Folgendes umfasst, nämlich: das Entfernen von zumindest einem zu wiegenden Behälter (20) von dem Linearförderer (30) mittels erster Greifmittel (3), das Übertragen des zu wiegenden Behälters (20) zu den Wiegemitteln (10), und das Entfernen des zumindest einen gewogenen Behälters (20') von den Wiegemitteln (10) mittels dritter Greifmittel (5), und das Übertragen des gewogenen Behälters (20') zu dem Linearförderer (30) mittels zweiter Greifmittel (4); und das Wiegen des zu wiegenden Behälters (20), wobei das Entfernen und das Übertragen mit einer Rotationsbewegung erfolgt, wobei das Entfernen von zumindest einem zu wiegenden Behälter (20) das Entfernen des Letzteren von einem jeweiligen Gehäuse (31) des Linearförderers (30) umfasst, und das Übertragen des gewogenen Behälters (20') das Einsetzen des gewogenen Behälters (20') in ein leeres Gehäuse (31) umfasst, das zuvor von einem zu wiegenden Behälter (20) besetzt war, wobei nach dem Übertragen des zu wiegenden Behälters (20) zu den Wiegemitteln (10) das Entfernen und Übertragen für eine Pausenzeit der ersten, zweiten und dritten Greifmittel unterbrochen wird, die erforderlich ist, um den Behälter (20) zu wiegen.

13. Verfahren gemäß Anspruch 12, wobei das Entfernen und Übertragen von zumindest einem zu wiegenden Behälter (20) und das Entfernen und Übertragen von zumindest einem gewogenen Behälter (20') im Wesentlichen zur gleichen Zeit erreicht werden.

14. Verfahren gemäß Anspruch 12 oder 13, wobei das Entfernen und Übertragen der Behälter (20, 20') mit kontinuierlicher Bewegung erreicht werden.

15. Verfahren gemäß Anspruch 12 oder 13, wobei das Entfernen und Übertragen des Behälters (20, 20') mit getakteter indexierter Bewegung erreicht werden.

16. Verfahren gemäß Anspruch 15, wobei die Pausenzeit im Wesentlichen einem Pausenschritt der getakteten indexierten Bewegung entspricht.

17. Verfahren gemäß einem der Ansprüche 12 bis 16, wobei das Entfernen von zumindest einem zu wiegenden Behälter (20) von den Fördermitteln (30) das individuelle und hintereinander erfolgende Entfernen eines jeden Behälters (20) von den Fördermitteln (30) umfasst.

## Revendications

1. Appareil (1) pour le pesage de récipients (20) déplacés par des moyens d'acheminement (30), lesdits moyens d'acheminement comprenant un convoyeur linéaire (30) muni d'une pluralité de logements (31), chaque logement (31) étant conçu pour recevoir et contenir, au moins partiellement, un récipient respectif (20) de telle sorte que les récipients sont espacés les uns des autres et positionnés de manière précise par rapport audit convoyeur linéaire (30), ledit appareil (1) comprenant en outre des moyens de pesage (10) et des moyens de transfert (2) aptes à transférer au moins un récipient (20) à peser depuis lesdits moyens d'acheminement (30) auxdits moyens de pesage (10) et à transférer au moins un récipient pesé (20') depuis lesdits moyens de pesage (10) auxdits moyens d'acheminement (30), dans lequel lesdits moyens de transfert (2) comprennent des premiers moyens de préhension (3) aptes à prélever ledit au moins un récipient (20) à peser d'un logement respectif (31) dudit convoyeur linéaire (30) ; des seconds moyens de préhension (4) aptes à transférer ledit au moins un récipient pesé (20') audit convoyeur linéaire (30) en insérant ledit au moins un récipient pesé (20') dans un logement vide (31) précédemment occupé par un récipient à peser (20), et des troisièmes moyens de préhension (5) aptes à recevoir ledit au moins un récipient à peser (20) desdits premiers moyens de préhension (3) et à transférer ledit au moins un récipient à peser (20) auxdits moyens de pesage (10), et aptes à prélever ledit au moins un récipient pesé (20') desdits moyens de pesage (10) après le pesage et à fournir ledit au moins un récipient pesé (20') aux seconds moyens de préhension (4), lesdits premiers moyens de préhension (3), lesdits seconds moyens de préhension (4) et lesdits troisièmes moyens de préhension (5) étant des moyens d'acheminement tournant respectivement autour d'un premier axe de rotation (3A), d'un second axe de rotation (4A) et d'un troisième axe de rotation (5A), lesdits axes de rotation (3A, 4A, 5A) étant sensiblement parallèles entre eux et perpendiculaires à un plan de déplacement desdits récipients (20), ledit appareil (1) étant configuré de sorte à peser ledit récipient dans un temps de pause desdits premiers, seconds et troisièmes moyens de préhension (3, 4, 5).

2. Appareil selon la revendication 1, dans lequel les moyens de préhension (3, 4, 5) comprennent des moyens de saisie (6) aptes à saisir les récipients respectifs (20, 20').

3. Appareil selon la revendication 1 ou 2, dans lequel lesdits moyens de préhension (3, 4, 5) comprennent des premiers moyens de soutien par aspiration (7) aptes à soutenir et maintenir lesdits récipients respectifs (20, 20').

4. Appareil selon la revendication 3, dans lequel chacun des premiers moyens de soutien par aspiration (7) comprend au moins une première cavité (7a) qui est apte à recevoir un récipient respectif (20) et est reliée à des moyens d'aspiration.

5. Appareil selon la revendication 3, dans lequel lesdits moyens de préhension (3, 4, 5) comprennent des seconds moyens de soutien (8) pourvus d'une pluralité de secondes cavités (8a) aptes à recevoir les récipients respectifs (20).

6. Appareil selon la revendication 5, dans lequel lesdites secondes cavités (8a) de chacun des seconds moyens de soutien (8) sont angulairement espacées.

7. Appareil selon la revendication 5, comprenant des moyens de guidage (40, 41, 42, 43) aptes à maintenir les récipients (20, 20') au moins en appui sur les secondes cavités respectives (8a) desdits seconds moyens de soutien (8).

8. Appareil selon les revendications 4 ou 5, dans lequel lesdites cavités (7a, 8a) ont une forme qui est sensiblement complémentaire à une surface latérale externe desdits récipients (20).

9. Appareil selon l'une quelconque des revendications 1 à 8, dans lequel lesdits moyens de pesage (10) comprennent au moins une balance (10a).

10. Appareil selon la revendication 9, dans lequel lesdits moyens de pesage (10) comprennent des moyens de positionnement (11) aptes à transférer un récipient (20, 20') depuis les moyens de transfert (2) à la balance correspondante (10a) et vice versa.

11. Appareil selon l'une quelconque des revendications 1 à 10, dans lequel lesdits moyens de transfert (2) sont animés d'un mouvement intermittent indexé ou d'un mouvement continu.

12. Procédé pour le pesage de récipients (20) déplacés par un convoyeur linéaire (30) à travers des moyens de pesage (10), le convoyeur linéaire (30) étant muni d'une pluralité de logements (31), chaque logement (31) étant conçu pour recevoir et contenir, au moins partiellement, un récipient respectif (20) de telle sorte que les récipients sont espacés les uns des autres et positionnés de manière précise par rapport audit convoyeur linéaire (30), comprenant les étapes consistant à prélever au moins un récipient (20) à peser dudit convoyeur linéaire (30) au moyen de premiers moyens de préhension (3), à transférer ledit récipient (20) à peser auxdits moyens de pesage (10) et à prélever au moins un récipient pesé (20') desdits moyens de pesage (10) au moyen de troisièmes moyens de préhension (5), et à transférer ledit récipient pesé (20') audit convoyeur linéaire (30) au moyen des seconds moyens de préhension (4) ; et à peser ledit récipient (20) à peser, dans lequel ledit prélèvement et ledit transfert se produisent avec un mouvement de rotation, ledit prélèvement d'au moins un récipient à peser (20) comprenant l'étape consistant à prélever ce dernier d'un logement respectif (31) dudit convoyeur linéaire (30) et ledit transfert dudit récipient pesé (20') comprenant l'étape consistant à insérer ledit récipient pesé (20') dans un logement vide (31) précédemment occupé par un récipient à peser (20), après ledit transfert dudit récipient (20) à peser sur lesdits moyens de pesage (10) lesdits prélèvement et transfert étant interrompus pendant un temps de pause desdits premiers, seconds et troisièmes moyens de préhension nécessaire pour le pesage dudit récipient (20).

13. Procédé selon la revendication 12, dans lequel lesdits prélèvement et transfert d'au moins un récipient à peser (20) et lesdits prélèvement et transfert d'au moins un récipient pesé (20') sont réalisés sensiblement en même temps.

14. Procédé selon la revendication 12 ou 13, dans lequel lesdits prélèvement et transfert dudit récipient (20, 20') sont réalisés selon un mouvement continu.

15. Procédé selon la revendication 12 ou 13, dans lequel lesdits prélèvements et transfert dudit récipient (20, 20') sont réalisés selon un mouvement indexé intermittent.

16. Procédé selon la revendication 15, dans lequel ledit temps de pause correspond sensiblement à une étape de pause dudit mouvement indexé intermittent.

17. Procédé selon l'une quelconque des revendications 12 à 16, dans lequel ledit prélèvement d'au moins un récipient à peser (20) depuis lesdits moyens d'acheminement (30) consiste à prélever individuellement et l'un après l'autre chaque récipient (20) desdits moyens d'acheminement (30).
